# EUROPÄISCHE PATENTSCHRIFT

(11) **EP 4 056 397 B1**
(45) Veröffentlichungstag und Bekanntmachung des Hinweises auf die Patenterteilung: **20.09.2023**
(21) Anmeldenummer: 22159626.5
(22) Anmeldetag: 02.03.2022
(51) Int. Cl.: B60K 7/00, B60K 17/14

(54) **ANTRIEBSBAUGRUPPE FÜR EIN FAHRZEUG**
DRIVE MODULE FOR A VEHICLE
MODULE D'ENTRAÎNEMENT POUR UN VÉHICULE

(30) Priorität: 12.03.2021 DE 102021202447
(43) Veröffentlichungstag der Anmeldung: 14.09.2022
(73) Patentinhaber: Robert Bosch GmbH, 70442 Stuttgart (DE)
(72) Erfinder: Schwartz, Daniel, 71701 Schwieberdingen (DE); Feigl, Markus, 71706 Markgroeningen (DE)

(56) Entgegenhaltungen:
- EP-A1- 1 919 727
- US-A- 3 302 739
- US-A- 3 892 300
- US-A1- 2004 080 223
- US-A1- 2009 025 991
- US-A1- 2019 299 769

## Beschreibung

### Technisches Gebiet

Die vorliegende Erfindung betrifft eine Antriebsbaugruppe für ein Fahrzeug, insbesondere für ein Straßenfahrzeug wie einen PKW, einen LKW oder einen Bus.

### Stand der Technik

Ganz oder teilweise elektrisch angetriebene Fahrzeuge weisen eine Antriebsvorrichtung mit einem Elektromotor auf, welcher kinematisch an zumindest eine Achse oder an zumindest ein Rad des Fahrzeugs gekoppelt ist, um diese bzw. dieses anzutreiben. Typischerweise ist ein Getriebe vorgesehen, um eine kinematische Verbindung zwischen Rad und Elektromotor herzustellen. Als elektrische Energiequelle für den Motor kann ein elektrischer Energiespeicher, z.B. ein Akkumulator, vorgesehen sein, wobei der Elektromotor über eine Leistungselektronik mit dem Energiespeicher elektrisch verbunden ist.

In der WO 2018/150007 A1 wird eine Antriebsbaugruppe beschrieben, bei welcher eine elektrische Maschine, ein Getriebe und eine Leistungselektronik in einem gemeinsamen Gehäuse untergebracht sind. Ferner ist eine Reibbremsanlage, welche eine mit dem Getriebe verbundene Antriebsachse bremst, in einem vom Rest des Gehäuses abgekapselten Teilraum untergebracht, um das Eindringen von Feinstaub in das übrige Gehäuse und ein Austreten von Feinstaub nach außen hin zu verhindern.

Weitere Antriebsbaugruppen werden in der DE 10 2011 113 198 A1 und der DE 10 2010 017 991 A1 offenbart. US 2009/025991 A1 offenbart eine Antriebsbaugruppe mit den Merkmalen des Oberbegriffs des Anspruchs 1.

### Offenbarung der Erfindung

Erfindungsgemäß ist eine Antriebsbaugruppe mit den Merkmalen des Anspruchs 1 vorgesehen.

Eine erfindungsgemäße Antriebsbaugruppe für ein Fahrzeug umfasst ein Gehäuse, eine in einem ersten Teilbereich des Gehäuses aufgenommene elektrische Maschine und ein in einem zweiten Teilbereich des Gehäuses aufgenommenes Getriebe, welches kinematisch an die elektrische Maschine gekoppelt ist, wobei der zweite Teilbereich des Gehäuses ein Schmierflüssigkeitsreservoir ausbildet, in welches das Getriebe hineinragt. Ferner umfasst die Antriebsbaugruppe eine kinematisch an das Getriebe gekoppelte Radwelle zur Verbindung mit einem Rad des Fahrzeugs, welche sich in dem zweiten Teilbereich des Gehäuses und aus dem zweiten Teilbereich des Gehäuses auf eine Außenseite des Gehäuses herausragt, und eine Reibbremsanlage mit einer Bremseinrichtung, welche einen an der Radwelle befestigten Bremskörper und einen Bremsaktuator zum Ausüben einer Reibkraft auf den Bremskörper aufweist. Der Bremskörper ist in dem zweiten Teilbereich des Gehäuses angeordnet und ragt in das Schmierflüssigkeitsreservoir hinein.

Eine der Erfindung zugrundeliegende Idee besteht darin, eine hochintegrierte Antriebsbaugruppe bereitzustellen, bei der eine elektrische Maschine, ein Getriebe und eine Bremsanlage zu einer Baugruppe zusammengefasst sind, wobei die Bremsanlage eine Reibbremse umfasst, welche entweder außen an dem Gehäuse angeordnet ist oder innerhalb eines Gehäuses derart angeordnet ist, dass sie in einem Ölbad bzw. Schmiermittelreservoir des Gehäuses läuft. Die Reibbremse umfasst einen Bremskörper, wie z.B. eine Bremsscheibe oder eine Bremstrommel, der drehfest mit einer über das Getriebe an die elektrische Maschine gekoppelte Radwelle verbunden ist. Das Gehäuse definiert einen Innenraum, in dem die elektrische Maschine, z.B. eine Drehstrommaschine wie eine Synchron- oder eine Asynchronmaschine, in einem ersten Teilbereich und das Getriebe in einem zweiten Teilbereich aufgenommen ist. Der erste und der zweite Teilbereich sind gegeneinander fluiddicht abgedichtet.

Wenn der Bremskörper in das Schmierflüssigkeitsreservoir hineinragt, bietet dies den Vorteil, dass der Bremskörper sehr effizient gekühlt wird. Gleichzeitig werden Feinstaubpartikel in der Schmierflüssigkeit gebunden. Insbesondere kann auf diese Weise der Wartungsaufwand der Bremseinrichtung deutlich reduziert werden. Weiterhin kann die Bremsanlage einfach zusammen mit der Radwelle montiert werden. Insbesondere muss kein Teilbereich des Gehäuses ausschließlich für die Bremseinrichtung vorgesehen werden, sondern diese kann in den für das Getriebe vorgesehenen Teilbereich integriert.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß manchen Ausführungsformen kann vorgesehen sein, dass die Reibbremsanlage eine hydraulisch mit der Bremseinrichtung verbundene hydraulische Schalteinheit aufweist, welche dazu eingerichtet ist, die vom Bremsaktuator ausgeübte Reibkraft zu variieren, wobei die Schalteinheit in dem Gehäuse aufgenommen ist, insbesondere im zweiten Teilbereich des Gehäuses. Die Schalteinheit kann z.B. ein oder mehrere Ventile aufweisen, z.B. um Bremsflüssigkeit aus dem Bremsaktuator abzulassen oder diesem zuzuführen. Durch die Anordnung der Schalteinheit innerhalb des Gehäuses wird ein kompakter Aufbau erzielt und der Integrationsgrad der Antriebsbaugruppe weiter erhöht.

Gemäß manchen Ausführungsformen kann vorgesehen sein, dass eine erste Radwelle und eine zweite Radwelle kinematisch an das Getriebe gekoppelt sind, wobei die Reibbremsanlage eine erste Bremseinrichtung mit einem an der ersten Radwelle befestigten ersten Bremskörper und einem ersten Bremsaktuator zum Ausüben einer Reibkraft auf den ersten Bremskörper, und eine zweite Bremseinrichtung mit einem an der zweiten Radwelle befestigten zweiten Bremskörper und einen zweiten Bremsaktuator zum Ausüben einer Reibkraft auf den zweiten Bremskörper aufweist, und wobei die Schalteinheit mit der ersten und der zweiten Bremseinrichtung verbunden und dazu eingerichtet ist, die von den Bremsaktuatoren ausgeübte Reibkraft wellenindividuell zu variieren. Die Schalteinheit kann beispielsweise dazu eingerichtet sein, eine Antiblockierfunktion auszuführen. Optional kann in die Schalteinheit ferner eine Druckerzeugungseinrichtung, z.B. in Form einer Pumpe integriert sein.

Gemäß manchen Ausführungsformen kann vorgesehen sein, dass die Antriebsbaugruppe eine in einem dritten Teilbereich des Gehäuses aufgenommene Lenkanlage aufweist. Der dritte Teilbereich ist vorzugsweise fluiddicht zu dem ersten und/oder dem zweiten Teilbereich ausgeführt. Die Lenkanlage kann z.B. einen elektrischen Lenkantriebs- oder Servomotor, ein mit dem Lenkantriebsmotor verbundenes Lenkgetriebe und an das Lenkgetriebe gekoppelte Lenkstangen aufweisen, welche aus dem dritten Teilbereich auf die Außenseite des Gehäuses herausragen. Somit wird der Integrationsgrad der Antriebsbaugruppe weiter vergrößert.

Gemäß manchen Ausführungsformen kann vorgesehen sein, dass die Antriebsbaugruppe eine in einem vierten Teilbereich des Gehäuses aufgenommene elektronische Steuerungsvorrichtung aufweist, welche elektrisch leitend mit der elektrischen Maschine und der Reibbremsanlage verbunden und dazu eingerichtet ist, einen Betrieb der elektrischen Maschine und der Reibbremsanlage zu steuern. Die Steuerungsvorrichtung kann insbesondere eine leistungselektronische Schaltung, wie z.B. eine Inverterschaltung, und eine signalelektronische Schaltung aufweisen. Die signalelektronische Schaltung kann beispielsweise einen oder mehrere Prozessoren, z.B. in Form einer CPU, eines FPGA oder eines ASIC, sowie einen oder mehrere Speicherbausteine, z.B. in Form von nicht-flüchtigen Speichern wie Flash-Speichern oder Festplatten aufweisen. Die signalelektronische Schaltung ist einerseits dazu eingerichtet, Bremsaktuationssignale zu erzeugen, um die Bremseinrichtung zu betätigen, z.B. um einen Bremsdruck zur Aufbringung der Reibkraft durch den Bremsaktuator auf das Bremsstück zu erzeugen und/oder die Schalteinheit zu betätigen, z.B. um eine Antiblockierfunktion auszuführen. Ferner ist die signalelektronische Schaltung dazu eingerichtet, die leistungselektronische Schaltung anzusteuern, z.B. um die elektrische Maschine als Motor oder als Generator zu betreiben. Somit wird ein gemeinsames Steuergerät für die Bremsanlage, die elektrische Maschine sowie optional zum Betreiben die Lenkeinrichtung bereitgestellt. Diese Steuerungsvorrichtung ist in einem fluiddichten vierten Teilbereich des Gehäuses untergebracht, der z.B. benachbart zu dem ersten Teilbereich gelegen sein kann.

Gemäß manchen Ausführungsformen kann vorgesehen sein, dass den ersten Teilbereich und den zweiten Teilbereich definierende Wandungen des Gehäuses einstückig ausgebildet sind. Weiterhin kann vorgesehen sein, dass den ersten Teilbereich, den zweiten Teilbereich und den dritten Teilbereich definierende Wandungen des Gehäuses einstückig ausgebildet sind. Weiter optional kann vorgesehen sein, dass den ersten Teilbereich, den zweiten Teilbereich und den vierten Teilbereich definierende Wandungen des Gehäuses einstückig ausgebildet sind. Darüber hinaus ist auch denkbar, dass die den ersten Teilbereich, den zweiten Teilbereich, den dritten Teilbereich und den vierten Teilbereich definierende Wandungen des Gehäuses einstückig ausgebildet sind. Allgemein können die verschiedenen Teilbereiche als Hohlräume in einem monolithischen Gehäuse integriert sein. Beispielsweise ist es denkbar, das Gehäuse als Gussteil auszuführen. Die einstückige Ausführung des Gehäuses bietet den Vorteil, dass dieses kostengünstig herstellbar ist und der Montageaufwand verringert wird.

Im Folgenden wird die Erfindung unter Bezugnahme auf die Figuren der Zeichnungen erläutert. Von den Figuren zeigen:
- Fig. 1: ein schematisches Blockschaltbild einer Antriebsbaugruppe gemäß einem Ausführungsbeispiel der Erfindung;
- Fig. 2: eine schematische perspektivische Außenansicht einer Antriebsbaugruppe gemäß einem Ausführungsbeispiel der Erfindung;
- Fig. 3: eine schematische Schnittansicht einer Antriebsbaugruppe gemäß einem Ausführungsbeispiel der Erfindung;
- Fig. 4: eine Schnittansicht der in Fig. 3 gezeigten Antriebsbaugruppe, die sich bei einem Schnitt entlang der in Fig. 3 eingezeichneten Linie A-A ergibt;
- Fig. 5: eine Schnittansicht der in Fig. 3 gezeigten Antriebsbaugruppe, die sich bei einem Schnitt entlang der in Fig. 3 eingezeichneten Linie B-B ergibt; und
- Fig. 6: eine schematische Schnittansicht einer Antriebsbaugruppe nicht Teil der Erfindung.

In den Figuren bezeichnen dieselben Bezugszeichen gleiche oder funktionsgleiche Komponenten, soweit nichts Gegenteiliges angegeben ist.

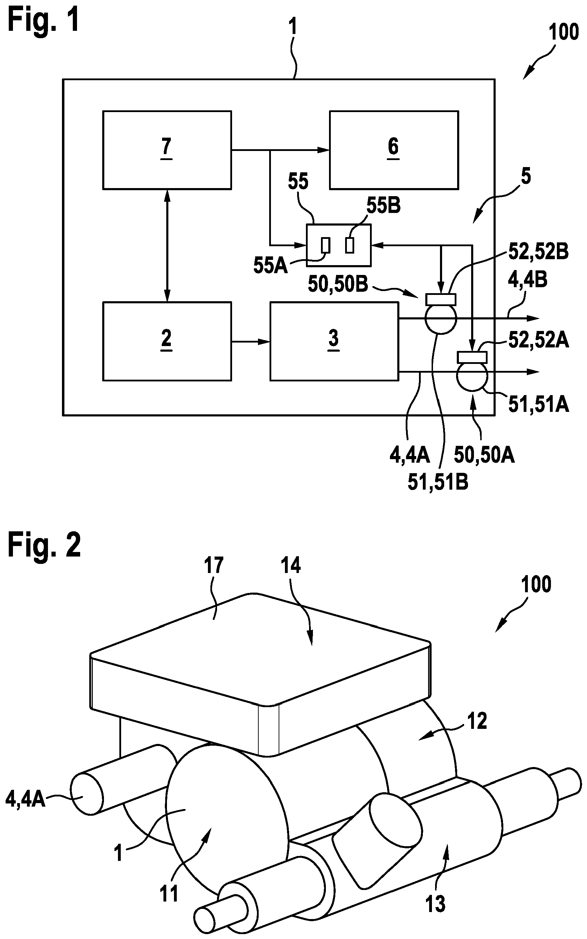

Fig. 1 zeigt schematisch ein Blockschaltbild einer Antriebsbaugruppe 100 für ein Fahrzeug. Die Antriebsbaugruppe 100 umfasst ein Gehäuse 1, eine elektrische Maschine 2, ein Getriebe 3, eine Radwelle 4 und eine Reibbremsanlage 5. Wie in Fig. 1 außerdem gezeigt ist, kann zusätzlich optional eine Lenkanlage 6 und/oder eine Steuerungsvorrichtung 7 vorgesehen sein. Die im Folgenden beschriebene Antriebsbaugruppe 100 kann insbesondere zum Antrieb eines Straßenfahrzeugs, wie einem PKW, einem LKW oder einem Bus verwendet werden.

Wie in Fig. 1 schematisch dargestellt ist, sind die elektrische Maschine 2, das Getriebe 3 und die Reibbremsanlage 5 in dem Gehäuse 1 aufgenommen. Die Radwelle 4, wobei in Fig. 1 rein beispielhaft gezeigt ist, dass eine erste und eine zweite Radwelle 4A, 4B vorgesehen sind, ragen aus dem Gehäuse 1 heraus und sind zur Verbindung mit einem jeweiligen Rad des Fahrzeugs vorgesehen, um dieses anzutreiben. Die Steuerungsvorrichtung 7 und die Lenkanlage 6 sind gegebenenfalls ebenfalls in dem Gehäuse 1 aufgenommen.

Wie in Fig. 1 schematisch dargestellt, ist das Getriebe 3 kinematisch an die elektrische Maschine 2 gekoppelt. Die erste und die zweite Radwelle 4A, 4B sind ihrerseits kinematisch an das Getriebe 3 gekoppelt. Somit ist ein Drehmoment durch das Getriebe 3 zwischen der elektrischen Maschine 2 und den Radwellen 4A, 4B übertragbar und umgekehrt. Die elektrische Maschine 2 kann insbesondere eine Drehstrommaschine sein, z.B. eine Synchronmaschine oder eine Asynchronmaschine.

Wie in Fig. 1 schematisch dargestellt, weist die Reibbremsanlage 5 eine Bremseinrichtung 50 auf. Insbesondere kann eine erste Bremseinrichtung 50A zum Bremsen der ersten Radwelle 50A und eine zweite Bremseinrichtung 50B zum Bremsen der zweiten Radwelle 50B vorgesehen sein, wie dies in Fig. 1 beispielhaft gezeigt ist. Optional kann die Reibbremsanlage 5 außerdem eine hydraulische Schalteinheit 55 aufweisen.

Wie in Fig. 1 schematisch gezeigt ist, kann jede Schalteinheit 50 jeweils einen Bremskörper 51 und einen Bremsaktuator 52 aufweisen. Der Bremskörper 51 kann z.B. eine Bremsscheibe oder eine Bremstrommel sein und ist drehfest mit der Radwelle 50 verbunden. Der Bremsaktuator 52, welcher z.B. ein hydraulisch betätigbarer Bremszylinder sein kann, weist einen Reibkörper (nicht dargestellt) auf, welcher an den Bremskörper 51 anlegbar ist, um eine Reibkraft zu erzeugen. Der Bremsaktuator 52 kann beispielsweise über einen manuell betätigbaren Hauptbremszylinder (nicht gezeigt) und/oder eine Druckerzeugungseinrichtung (nicht gezeigt), wie z.B. einen Plunger, betätigt werden. Bei der in Fig. 1 beispielhaft gezeigten Antriebsbaugruppe 100 weist die erste Bremseinrichtung 50A einen an der ersten Radwelle 4A befestigten ersten Bremskörper 51A und einen ersten Bremsaktuator 52A zum Ausüben einer Reibkraft auf den ersten Bremskörper 51A auf. In gleicher Weise umfasst die zweite Bremseinrichtung 50B einen an der zweiten Radwelle 4B befestigten zweiten Bremskörper 51B und einen zweiten Bremsaktuator 52B zum Ausüben einer Reibkraft auf den zweiten Bremskörper 51B.

Die Schalteinheit 55 ist in Fig. 1 lediglich symbolisch dargestellt und ist hydraulisch mit der ersten und der zweiten Bremseinrichtung 50A, 50B verbunden. Die Schalteinheit 55 kann insbesondere verschiedene Ventile 55A, 55B aufweisen, welche den jeweiligen Bremsaktuator 52A, 52B wahlweise mit einer Druckquelle für Bremsfluid verbinden oder von dieser trennen, insbesondere um an jeder Radwelle 4A, 4B eine Reibkraft individuell einstellen zu können, z.B. zur Ausführung einer Antiblockierfunktion. Allgemein ist die Schalteinheit 55 somit dazu eingerichtet, die vom Bremsaktuator 52 ausgeübte Reibkraft zu variieren.

Die optionale Steuerungsvorrichtung 7 kann beispielsweise eine leistungselektronische Schaltung (nicht gezeigt) und eine signal- oder steuerelektronische Schaltung (nicht gezeigt) aufweisen. Wie in Fig. 1 schematisch dargestellt ist die Steuerungsvorrichtung 7, insbesondere die leistungselektronische Schaltung elektrisch mit der elektrischen Maschine verbunden. Beispielsweise kann die leistungselektronische Schaltung eine Inverterschaltung aufweisen. Die signalelektronische Schaltung kann beispielsweise einen oder mehrere Prozessoreinheiten, z.B. CPUs, FPGAs, ASICs oder dergleichen, und einen oder mehrere Datenspeicher aufweisen, z.B. SD-Speicher, HD-Speicher oder dergleichen. Die signalelektronische Schaltung ist mit der leistungselektronischen Schaltung signalverbunden und dazu eingerichtet, diese zu steuern, um die elektrische Maschine 2 zu betreiben, z.B. als Motor oder als Generator. Die Steuerungsvorrichtung 7, insbesondere die signalelektronische Schaltung ist ferner mit der Schalteinheit 55 signalverbunden, um diese anzusteuern, z.B. zum Schalten der Ventile 55A, 55B.

Die optionale Lenkeinrichtung 6 kann beispielsweise einen Lenkantrieb (in Fig. 1 nicht gezeigt), z.B. in Form eines Elektromotors, ein mit dem Lenkantrieb verbundenes Lenkgetriebe (in Fig. 1 nicht gezeigt) und Lenkstangen oder Stellglieder (in Fig. 1 nicht gezeigt) aufweisen, die kinematisch an das Lenkgetriebe gekoppelt sind. Die Lenkeinrichtung 6 kann, wie in Fig. 1 beispielhaft gezeigt, mit der Steuerungsvorrichtung 7, insbesondere der signalelektronischen Schaltung signalverbunden sein, wobei die Steuerungsvorrichtung 7 dazu eingerichtet ist, die Lenkeinrichtung 6 zu betätigen, z.B. in dem sie ein Steuersignal erzeugt, welches eine Betätigung des Lenkantriebs bewirkt.

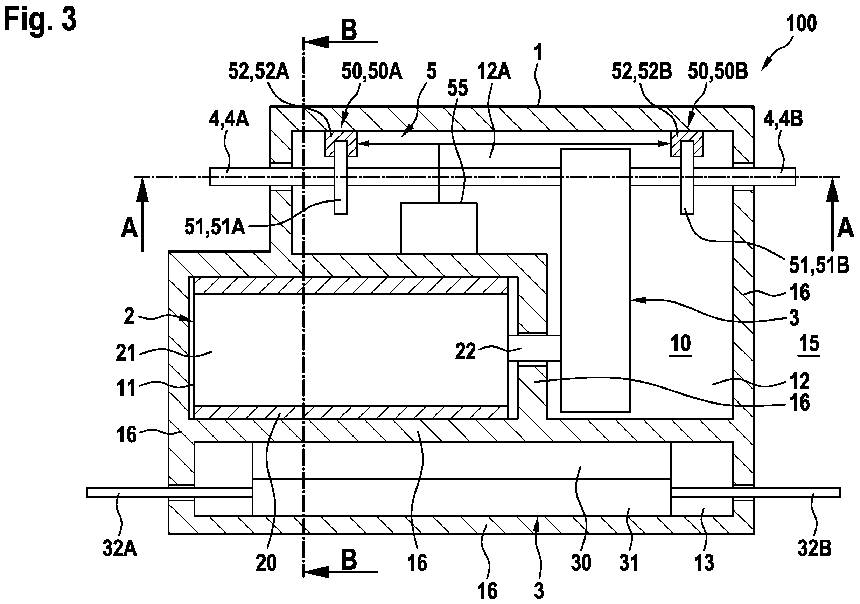

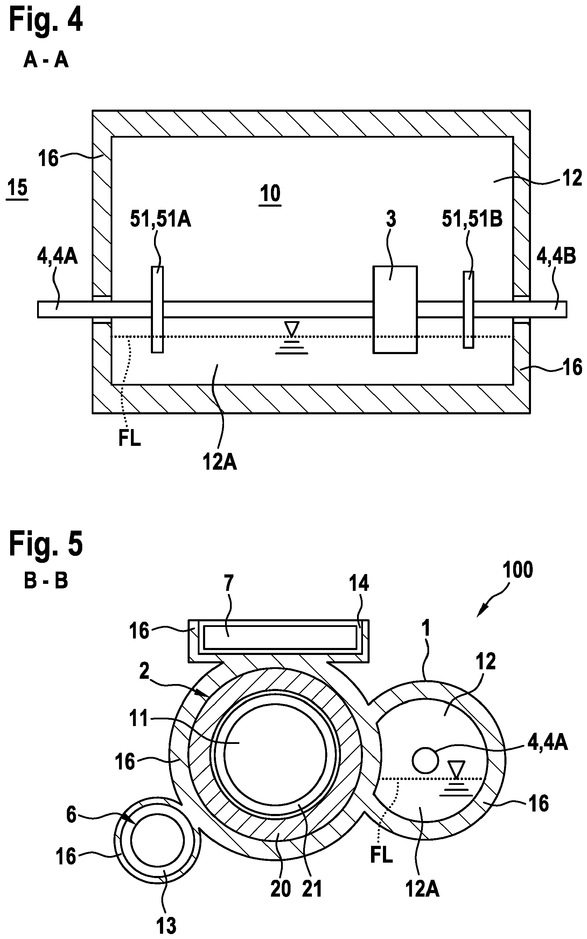

Fig. 2 zeigt schematisch und rein beispielhaft eine Außenansicht des Gehäuses 1 der Antriebsbaugruppe 100. Wie in Fig. 2 erkennbar, weist das Gehäuse 1 in mehrere Teilbereiche 11, 12, 13, 14 auf. Fig. 3 zeigt schematisch eine Schnittansicht der Antriebsbaugruppe 100. Fig. 4 zeigt eine Schnittansicht der in Fig. 3 gezeigten Antriebsbaugruppe 100, die sich bei einem Schnitt entlang der in Fig. 3 eingezeichneten Linie A-A ergibt. Fig. 5 zeigt eine Schnittansicht der in Fig. 3 gezeigten Antriebsbaugruppe, die sich bei einem Schnitt entlang der in Fig. 3 eingezeichneten Linie B-B ergibt.

Wie in Fig. 3 schematisch dargestellt, weist definiert das Gehäuse 1 einen Innenraum 10. Der Innenraum 10 ist durch Wandungen 16 umgrenzt und in zumindest einen ersten Teilbereich 11 und einen zweiten Teilbereich 12 unterteilt. In Fig. 3 bis 5 ist rein beispielhaft gezeigt, dass der Innenraum 10 zusätzlich in einen dritten Teilbereich 13 und in einen vierten Teilbereich 14 unterteilt ist. Die Wandungen 16, welche die Teilbereiche 11, 12, 13, 14 definieren, können insbesondere einstückig ausgebildet oder hergestellt sein, z.B. in einem Gießverfahren. Es ist jedoch auch denkbar, dass lediglich ein Teil der Wandungen 16 einstückig ausgebildet ist, und einer oder mehrere der Teilbereiche 11, 12, 13, 14 durch getrennte Wandungen definiert sind, die an den einstückigen Wandungen 16 befestigt sind, z.B. an diese angeflanscht.

Die elektrische Maschine 2 ist in Fig. 3 lediglich schematisch dargestellt und weist allgemein einen Stator 20 und einen durch den Stator 20 um eine Rotordrehachse rotierbaren Rotor 21 auf, welcher z.B. innerhalb des Stators 20 angeordnet sein kann, wie in Fig. 3 beispielhaft gezeigt. Wie in Fig. 3 schematisch dargestellt ist, kann die elektrische Maschine 2 in dem ersten Teilbereich 11 angeordnet sein. Der erste Teilbereich 11 kann insbesondere ein zylindrischer Hohlraum sein, welcher eine Längsachse umschließt, wie dies insbesondere in den Fig. 3 und 5 erkennbar ist. Eine fest mit dem Rotor 21 verbundene Rotorwelle 22 kann durch eine Ausnehmung in einer den ersten Teilbereich 11 umgrenzenden Wandung 16 in den zweiten Teilbereich 12 des Gehäuses 1 hineinragen. Vorzugsweise sind der erste und der zweite Teilbereich 11, 12 relativ zueinander fluiddicht abgedichtet, z.B. mittels Dichtringen (nicht gezeigt) oder dergleichen.

Das Getriebe 3 ist in Fig. 3 lediglich symbolisch als Block dargestellt und kann insbesondere mehrere Getriebeglieder, wie z.B. Zahnräder aufweisen, welche ineinandergreifen, um ein an der Rotorwelle 22 bei einer ersten Drehzahl vorliegendes erste Drehmoment in ein zweites Drehmoment bei einer zweiten Drehzahl an der Radwelle 4 bzw. den Radwellen 4A, 4B zu wandeln. Das Getriebe 3 ist in dem zweiten Teilbereich 12 des Gehäuses 1 aufgenommen und kinematisch an die elektrische Maschine 2, insbesondere an die Rotorwelle 22 gekoppelt. Wie in Fig. 3 erkennbar, kann sich der zweite Teilbereich 12 insbesondere in einer Richtung entlang der Längsachse des ersten Teilbereichs 12 an den ersten Teilbereich 12 anschließen und sich ferner seitlich des ersten Teilbereichs 12 erstrecken kann. Wie in Fig. 4 schematisch dargestellt, bildet der zweite Teilbereich 12 ein Schmierflüssigkeitsreservoir 12A aus, also eine Wanne, in welcher Schmierflüssigkeit wie z.B. Öl aufnehmbar oder aufgenommen ist. In den Fig. 4 und 5 ist schematisch ein Füllstand FL der Schmierflüssigkeit als gestrichelte Linie dargestellt ist. Das Getriebe 3 ist derart in dem zweiten Teilbereich 12 angeordnet, dass es in das Schmierflüssigkeitsreservoir 12A bzw. in die Schmierflüssigkeit hineinragt, wie dies in Fig. 4 schematisch gezeigt ist.

Die in den Fig. 3 bis 5 beispielhaft gezeigte Antriebsbaugruppe 100 weist, wie oben anhand von Fig. 1 beschrieben, eine erste und eine zweite Radwelle 4A, 4B auf. Wie in Fig. 3 schematisch dargestellt, können sich die Radwellen 4A, 4B insbesondere parallel zu der Rotorwelle 21 erstrecken. Wie Fig. 3 weiter zeigt, sind erstrecken sich die Radwellen 4A, 4B innerhalb des zweiten Teilbereichs 12 des Gehäuses 1 und ragen jeweils aus dem zweiten Teilbereich 12 auf eine Außenseite 15 des Gehäuses 1 heraus. Beispielsweise können sich die Radwellen 4A, 4B jeweils durch eine Ausnehmung in einer Stirnwandung 16 des Gehäuses 1 hindurch erstrecken, wie dies in Fig. 4 schematisch gezeigt ist. Die Radwellen 4A, 4B sind jeweils kinematisch an das Getriebe 3 gekoppelt, wie dies oben bereits erläutert wurde und in den Fig. 3 und 4 schematisch gezeigt ist.

Bei der in den Fig. 3 und 4 gezeigten Antriebsbaugruppe 100 sind die erste und die zweite Bremseinrichtung 50A, 50B der Reibbremsanlage 5 jeweils im zweiten Teilbereich 12 des Gehäuses 1 angeordnet. Wie in den Fig. 3 und 4 schematisch dargestellt, können der erste Bremskörper 51A der ersten Bremseinrichtung 50A und der zweite Bremskörper 51B der zweiten Bremseinrichtung 50B jeweils als Bremsscheiben realisiert sein, welche drehfest mit der jeweiligen Radwelle 4A, 4B verbunden sind. Es sind jedoch auch andere Gestaltungen, z.B. in Form von Bremstrommeln denkbar. Der erste Bremsaktuator 52A der ersten Bremseinrichtung 50A und der zweite Bremsaktuator 52B der zweiten Bremseinrichtung 50B können beispielsweise als hydraulische Bremszylinder realisiert sein, wie oben beschrieben, und insbesondere an einer Wandung 16 des Gehäuses 1 befestigt sein, wie in den Fig. 3 und 4 schematisch dargestellt. Wie in Fig. 4 schematisch gezeigt ist, sind die Radwellen 4A, 4B und die daran befestigten Bremskörper 51A, 51B derart in dem zweiten Teilbereich 12 des Gehäuses 1 angeordnet, dass die Bremskörper 51A, 51B in Schmierflüssigkeitsreservoir 12A bzw. in die Schmierflüssigkeit 12A hineinragen. Dadurch werden die Bremskörper 51A, 51B sehr gut durch die Schmierflüssigkeit 12A gekühlt und infolge der Reibung zwischen Bremskörper 51A, 51B und Reibstück des Bremsaktuators 52A, 52B entstehender Abrieb wird in der Schmierflüssigkeit gebunden. Optional kann die Schmierflüssigkeit mittels einer Fördereinrichtung (nicht gezeigt) wie einer Pumpe durch eine Filtereinrichtung (nicht gezeigt) zirkuliert werden, um Partikel aus der Schmierflüssigkeit abzuscheiden.

Die optionale hydraulische Schalteinheit 55 ist in Fig. 3 lediglich symbolisch als Block dargestellt und kann beispielsweise in dem zweiten Teilbereich 12 des Gehäuses 1 angeordnet sein. Es wären aber auch denkbar, die Schalteinheit 55 in einem anderen der Teilbereiche 11, 13, 14 unterzubringen.

Die Lenkanlage 6 ist gegebenenfalls in dem dritten Teilbereich 13 aufgenommen, wie dies in Fig. 3 schematisch dargestellt ist. Der dritte Teilbereich 13 kann beispielsweise ein im wesentlichen zylindrischer Hohlraum sein, welcher sich parallel zu dem ersten Teilbereich 11 erstreckt, wie in Fig. 3 beispielhaft und schematisch dargestellt. Der dritte Teilbereich 13 kann insbesondere vollständig räumlich von dem ersten und dem zweiten Teilbereich 11, 12 getrennt sein, wie dies in Fig. 3 schematisch dargestellt ist. Die Lenkanlage 6 ist in Fig. 3 ebenfalls lediglich schematisch dargestellt, wobei der Lenkantrieb 30 und das Lenkgetriebe 31 als Block dargestellt sind. Die Lenkstangen 32A, 32B können aus dem dritten Teilbereich 13 auf die Außenseite 15 des Gehäuses 1 herausragen, wie in Fig. 3 schematisch gezeigt.

Die optionale Steuerungsvorrichtung 7 ist symbolisch als Block in Fig. 5 dargestellt und kann in der oben beschriebenen Weise aufgebaut sein. Wie in Fig. 4 erkennbar, ist die Steuerungsvorrichtung 7 in dem vierten Teilbereich 14 des Gehäuses 1 angeordnet. Der vierte Teilbereich 14 kann beispielsweise in Bezug auf eine radiale Richtung, welche sich senkrecht zur Längsachse des ersten Teilbereichs 11 erstreckt, benachbart zu dem ersten Teilbereich 11 angeordnet sein, wie dies in Fig. 4 beispielhaft gezeigt ist. Insbesondere kann der vierte Teilbereich 14 durch einen im wesentlichen ebenen Boden und mehrere sich von diesem aus erstreckende Seitenwandungen umgrenzt sein, wie dies in Fig. 5 schematisch dargestellt ist. Der vierte Teilbereich 14 ist vorzugsweise fluiddicht gegenüber dem ersten Teilbereich 11 und/oder dem zweiten Teilbereich 12 und/oder dem dritten Teilbereich 13 abgedichtet. Wie in Fig. 2 schematisch dargestellt, kann der vierte Teilbereich 14 durch einen Deckel 17 verschlossen sein.

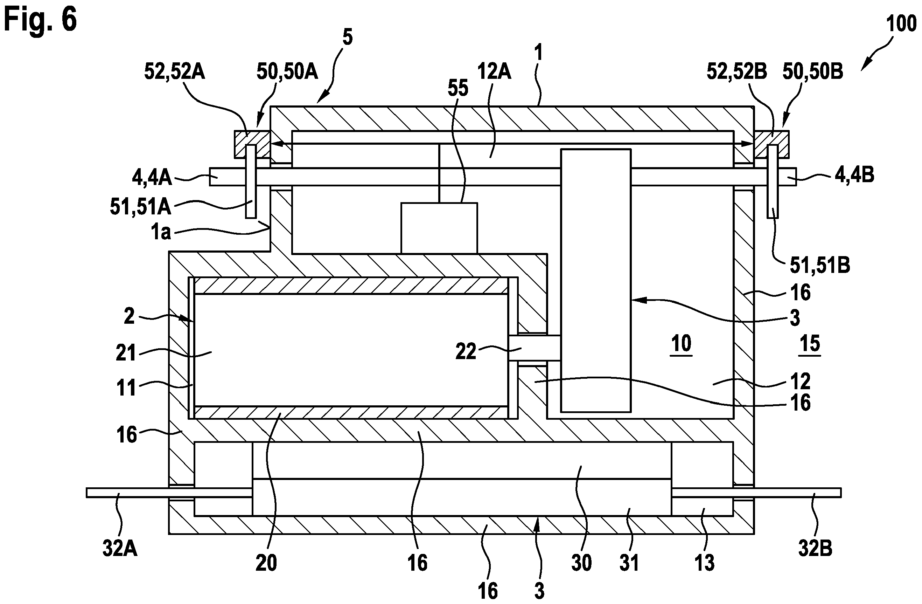

In Fig. 6 ist beispielhaft eine weitere Antriebsbaugruppe 100 dargestellt. Die in Fig. 6 dargestellte Antriebsbaugruppe 100 unterscheidet sich von der in den Fig. 3 bis 5 dargestellten Antriebsbaugruppe 100 lediglich dadurch, dass die erste und die zweite Bremseinrichtung 50A, 50B an der Außenseite 15, das heißt, außerhalb des Innenraums 10 des Gehäuses 1 angeordnet sind. Insbesondere sind die Bremskörper 51A, 51B an der Außenseite 15 des Gehäuses 1 angeordnet und somit von außen zugänglich und durch Umgebungsluft gekühlt. Die Bremsaktuatoren 52A, 52B können beispielsweise an einer Außenfläche 1a des Gehäuses 1 befestigt sein, wie dies in Fig. 6 schematisch dargestellt ist.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

## Patentansprüche

1. Antriebsbaugruppe (100) für ein Fahrzeug, aufweisend:
ein Gehäuse (1);
eine in einem ersten Teilbereich (11) des Gehäuses (1) aufgenommene elektrische Maschine (2);
ein in einem zweiten Teilbereich (12) des Gehäuses (1) aufgenommenes Getriebe (3), welches kinematisch an die elektrische Maschine (2) gekoppelt ist, wobei der zweite Teilbereich (12) des Gehäuses (1) ein Schmierflüssigkeitsreservoir (12A) ausbildet, in welches das Getriebe (3) hineinragt;
eine kinematisch an das Getriebe (3) gekoppelte Radwelle (4) zur Verbindung mit einem Rad des Fahrzeugs, welche sich in dem zweiten Teilbereich (12) des Gehäuses (1) erstreckt und aus dem zweiten Teilbereich (12) des Gehäuses (1) auf eine Außenseite (15) des Gehäuses (1) herausragt; und
eine Reibbremsanlage (5) mit einer Bremseinrichtung (50), welche einen an der Radwelle (4) befestigten Bremskörper (51) und einen Bremsaktuator (52) zum Ausüben einer Reibkraft auf den Bremskörper (51) aufweist;
**dadurch gekennzeichnet, dass**
der Bremskörper (51) in dem zweiten Teilbereich (12) des Gehäuses (1) angeordnet ist und in das Schmierflüssigkeitsreservoir (12A) hineinragt.

2. Antriebsbaugruppe (100) nach Anspruch 1, wobei die Reibbremsanlage (5) eine hydraulisch mit der Bremseinrichtung (50) verbundene hydraulische Schalteinheit (55) aufweist, welche dazu eingerichtet ist, die vom Bremsaktuator (52) ausgeübte Reibkraft zu variieren, wobei die Schalteinheit (55) in dem Gehäuse (1) aufgenommen ist, insbesondere im zweiten Teilbereich (12) des Gehäuses (1).

3. Antriebsbaugruppe (100) nach Anspruch 2, wobei eine erste Radwelle (4A) und eine zweite Radwelle (4B) kinematisch an das Getriebe (3) gekoppelt sind, wobei die Reibbremsanlage (5) eine erste Bremseinrichtung (50A) mit einem an der ersten Radwelle (4A) befestigten ersten Bremskörper (51A) und einem ersten Bremsaktuator (52A) zum Ausüben einer Reibkraft auf den ersten Bremskörper (51A), und eine zweite Bremseinrichtung (50B) mit einem an der zweiten Radwelle (4B) befestigten zweiten Bremskörper (51B) und einen zweiten Bremsaktuator (52B) zum Ausüben einer Reibkraft auf den zweiten Bremskörper (51B) aufweist, und wobei die Schalteinheit (55) mit der ersten und der zweiten Bremseinrichtung (50A, 50B) verbunden und dazu eingerichtet ist, die von den Bremsaktuatoren (52A, 52B) ausgeübte Reibkraft wellenindividuell zu variieren.

4. Antriebsbaugruppe (100) nach einem der voranstehenden Ansprüche, zusätzlich aufweisend:
eine in einem dritten Teilbereich (13) des Gehäuses (1) aufgenommene Lenkanlage (6).

5. Antriebsbaugruppe (100) nach einem der voranstehenden Ansprüche, zusätzlich aufweisend:
eine in einem vierten Teilbereich (14) des Gehäuses (1) aufgenommene elektronische Steuerungsvorrichtung (7), welche elektrisch leitend mit der elektrischen Maschine (2) und der Reibbremsanlage (5) verbunden und dazu eingerichtet ist, einen Betrieb der elektrischen Maschine (2) und der Reibbremsanlage (5) zu steuern.

6. Antriebsbaugruppe (100) nach einem der voranstehenden Ansprüche, wobei den ersten Teilbereich (11) und den zweiten Teilbereich (12) definierende Wandungen des Gehäuses (1) einstückig ausgebildet sind.

7. Antriebsbaugruppe (100) nach den Ansprüchen 4 und 6, wobei den ersten Teilbereich (11), den zweiten Teilbereich (12) und den dritten Teilbereich (13) definierende Wandungen des Gehäuses (1) einstückig ausgebildet sind.

8. Antriebsbaugruppe (100) nach den Ansprüchen 5 und 6, wobei den ersten Teilbereich (11), den zweiten Teilbereich (12) und den vierten Teilbereich (14) definierende Wandungen des Gehäuses (1) einstückig ausgebildet sind.

## Claims

1. Drive module (100) for a vehicle, comprising:
a housing (1);
an electric machine (2) accommodated in a first subregion (11) of the housing (1);
a gearbox (3) accommodated in a second subregion (12) of the housing (1), which is kinematically coupled to the electric machine (2), wherein the second subregion (12) of the housing (1) forms a lubricant reservoir (12A) into which the gearbox (3) protrudes;
a wheel shaft (4) kinematically coupled to the gearbox (3), to be connected to a wheel of the vehicle, which extends in the second subregion (12) of the housing (1) and protrudes out of the second subregion (12) of the housing (1) onto an outer side (15) of the housing (1); and
a friction brake system (5) having a braking device (50), which has a brake body (51) fastened to the wheel shaft (4) and a brake actuator (52) for exerting a frictional force on the brake body (51);
**characterized in that**
the brake body (51) is arranged in the second subregion (12) of the housing (1) and protrudes into the lubricant reservoir (12A).

2. Drive module (100) according to Claim 1, wherein the friction brake system (5) has a hydraulic switching unit (55) connected hydraulically to the braking device (50), which is set up to vary the frictional force exerted by the brake actuator (52), wherein the switching unit (55) is accommodated in the housing (1), in particular in the second subregion (12) of the housing (1).

3. Drive module (100) according to Claim 2, wherein a first wheel shaft (4A) and a second wheel shaft (4B) are kinematically coupled to the gearbox (3), wherein the friction brake system (5) has a first braking device (50A) with a first brake body (51A) fastened to the first wheel shaft (4A) and a first brake actuator (52A) for exerting a frictional force on the first brake body (51A), and a second braking device (50B) with a second brake body (51B) fastened to the second wheel shaft (4B) and a second brake actuator (52B) for exerting a frictional force on the second brake body (51B), and wherein the switching unit (55) is connected to the first and the second braking device (50A, 50B) and is set up to vary the frictional force exerted by the brake actuators (52A, 52B) individually for each shaft.

4. Drive module (100) according to one of the preceding claims, additionally having:
a steering system (6) accommodated in a third subregion (13) of the housing (1).

5. Drive module (100) according to one of the preceding claims, additionally having:
an electronic control device (7) accommodated in a fourth subregion (14) of the housing (1), which is electrically conductively connected to the electric machine (2) and the friction brake system (5) and is set up to control operation of the electric machine (2) and of the friction brake system (5).

6. Drive module (100) according to one of the preceding claims, wherein the walls of the housing (1) that define the first subregion (11) and the second subregion (12) are formed in one piece.

7. Drive module (100) according to Claims 4 and 6, wherein the walls of the housing (1) that define the first subregion (11), the second subregion (12) and the third subregion (13) are formed in one piece.

8. Drive module (100) according to Claims 5 and 6, wherein the walls of the housing (1) that define the first subregion (11), the second subregion (12) and the fourth subregion (14) are formed in one piece.

## Revendications

1. Module d'entraînement (100) pour un véhicule, présentant :
un carter (1) ;
une machine électrique (2) logée dans une première zone partielle (11) du carter (1) ;
une transmission (3) logée dans une deuxième zone partielle (12) du carter (1) et qui est couplée de manière cinématique à la machine électrique (2), dans lequel la deuxième zone partielle (12) du carter (1) réalise un réservoir de liquide de lubrification (12A) dans lequel la transmission (3) fait saillie ;
un arbre de roue (4) couplé de manière cinématique à la transmission (3) pour la connexion avec une roue du véhicule, qui s'étend dans la deuxième zone partielle (12) du carter (1) et qui fait saillie à l'extérieur de la deuxième zone partielle (12) du carter (1) sur un côté extérieur (15) du carter (1) ; et
un système de frein à friction (5) pourvu d'un dispositif de freinage (50) qui présente un corps de frein (51) fixé à l'arbre de roue (4) et un actionneur de frein (52) pour exercer une force de friction sur le corps de frein (51) ;
**caractérisé en ce que** le corps de frein (51) est disposé dans la deuxième zone partielle (12) du carter (1) et fait saillie dans le réservoir de liquide de lubrification (12A).

2. Module d'entraînement (100) selon la revendication 1, dans lequel le système de frein à friction (5) présente une unité de commutation hydraulique (55) reliée hydrauliquement au dispositif de freinage (50), qui est conçue pour faire varier la force de friction exercée par l'actionneur de frein (52), dans lequel l'unité de commutation (55) est reçue dans le carter (1), en particulier dans la deuxième zone partielle (12) du carter (1).

3. Module d'entraînement (100) selon la revendication 2, dans lequel un premier arbre de roue (4A) et un deuxième arbre de roue (4B) sont couplés de manière cinématique à la transmission (3), dans lequel le système de frein à friction (5) présente un premier dispositif de freinage (50A) pourvu d'un premier corps de frein (51A) fixé au premier arbre de roue (4A) et d'un premier actionneur de frein (52A) pour exercer une force de friction sur le premier corps de frein (51A) et un deuxième dispositif de freinage (50B) pourvu d'un deuxième corps de frein (51B) fixé au deuxième arbre de roue (4B) et d'un deuxième actionneur de freinage (52B) pour exercer une force de friction sur le deuxième corps de frein (51B), et dans lequel l'unité de commutation (55) est reliée au premier et au deuxième dispositif de freinage (50A, 50B) et est conçue pour faire varier la force de friction exercée par les actionneurs de frein (52A, 52B) individuellement pour chaque arbre.

4. Module d'entraînement (100) selon l'une quelconque des revendications précédentes, présentant en outre :
un système de direction (6) logé dans une troisième zone partielle (13) du carter (1).

5. Module d'entraînement (100) selon l'une quelconque des revendications précédentes, présentant en outre :
un dispositif de commande électronique (7) logé dans une quatrième zone partielle (14) du carter (1), qui est relié de manière électriquement conductrice à la machine électrique (2) et au système de frein à friction (5) et est conçu pour commander un fonctionnement de la machine électrique (2) et du système de frein à friction (5).

6. Module d'entraînement (100) selon l'une quelconque des revendications précédentes, dans lequel des parois du carter (1) définissant la première zone partielle (11) et la deuxième zone partielle (12) sont réalisées d'un seul tenant.

7. Module d'entraînement (100) selon l'une quelconque des revendications 4 et 6, dans lequel des parois du carter (1) définissant la première zone partielle (11), la deuxième zone partielle (12) et la troisième zone partielle (13) sont réalisées d'un seul tenant.

8. Module d'entraînement (100) selon l'une quelconque des revendications 5 et 6, dans lequel des parois du carter (1) définissant la première zone partielle (11), la deuxième zone partielle (12) et la quatrième zone partielle (14) sont réalisées d'un seul tenant.
